(19)

**Europäisches Patentamt**
**European Patent Office**
**Office européen des brevets**

(11)     **EP 1 527 117 B1**

(12)                              **EUROPEAN PATENT SPECIFICATION**

(45) Date of publication and mention
of the grant of the patent:
**15.08.2012   Bulletin 2012/33**

(51) Int Cl.:
*C08G 18/50* [(2006.01)]      *C08G 65/331* [(2006.01)]
*C08G 65/333* [(2006.01)]

(21) Application number: **03784003.0**

(22) Date of filing: **02.07.2003**

(86) International application number:
**PCT/EP2003/007033**

(87) International publication number:
**WO 2004/014980 (19.02.2004 Gazette 2004/08)**

(54) **POLYOLS**

POLYOLE

POLYOLS

(84) Designated Contracting States:
**DE ES FR GB IT**

(30) Priority:  **02.08.2002  EP 02017371**

(43) Date of publication of application:
**04.05.2005   Bulletin 2005/18**

(73) Proprietor: **HUNTSMAN INTERNATIONAL LLC**
**Salt Lake City, Utah 84108 (US)**

(72) Inventors:
• **PARFONDRY, Alain**
**B-1150 Brussels (BE)**
• **VAN KEER, Karen Maria**
**3012 Wilsele-Putkapel (BE)**

• **YU, Jianming**
**Changping Sc. Park,**
**102200 Beijing (CN)**

(74) Representative: **Van den Broeck, Kristel Alice et al**
**Huntsman (Europe) BVBA**
**Intellectual Property Department**
**Everslaan 45**
**3078 Everberg (BE)**

(56) References cited:
**EP-A- 0 187 949      EP-A- 0 341 593**
**EP-A- 0 582 127      US-A- 3 042 631**
**US-A- 3 779 927      US-A- 4 186 119**

EP 1 527 117 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention is concerned with a novel class of polyoxyethylene polyoxypropylene polyols and with a process for preparing polyurethane materials from such polyols.

Polyoxyethylene polyoxypropylene polyols and in particular those, which have been made from so called amine - containing initiators, are known. See e.g. US 5367050, US 5476969, US 5672636, EP 539819 and WO 01/58976 wherein the amount ofoxypropylene groups is relatively high with respect to the amount to oxyethylene groups.

Polyols with a high oxyethylene group content have been disclosed in US 2979528 and GB 776661; these polyols are blockcopolymer polyols which are solids at room temperature at higher oxyethylene levels; see Table III and lines 21-31 of page 7 of GB 776661. See also SPI-PU Conference Proceedings, 26-29 September 1995 - page 212-215 and Review of Block Polymer Surfactants, I.R. Schmolka, Journal of the American Oil Chemists Society, March 1977, page 112.

Further EP 187949 discloses a class of alkoxylated amino-polyethers including polymerising a $C_2$-$C_{12}$ alkylene oxide followed by polymerisation of ethylene oxide or a mixture of $C_2$-$C_{40}$ epoxides.

EP 582127 discloses polyether polyols which are initiated with a polyhydric polyamine wherein the polyol has internal polyoxyethylene blocks.

US 3042631 discloses polyether polyols initiated with amine compounds wherein the polyol has external polyoxyethylene blocks.

US 4186119 discloses similar polyols; see e.g. example 13.

US 3779927 and EP 341593 disclose amine initiated polyoxyethylene polyoxypropylene polyols which may be random or block copolymers.

Surprisingly a new class of polyols has been found having a high oxyethylene content and having part of the oxyethylene groups in block form and the other part in random form and which shows a melting point below a certain level despite the high oxyethylene content. The polyols are useful in preparing polyurethane materials, especially water-blown polyurethane materials, such materials showing a lower level of volatile organic compounds and a lower degree of fogging. Further these polyols provide the opportunity to make polyurethane materials without using catalysts or using a lower amount of catalyst.

Therefore, the present invention is related to a polyoxyethylenepolyoxypropylene polyol having an average nominal hydroxyl functionality of 2-6, an average equivalent weight of 500-5000, an average molecular weight of 1000-20000, an oxyethylene content of 50-90 % by weight (calculated on the amount of oxyethylene and oxypropylene groups) and wherein 10-90 % of the oxyethylene groups are distributed randomly and wherein the polyol is prepared by alkoxylation of an initiator having 2-6 active hydrogen atoms and at least one nitrogen atom and wherein the tails of the polyol have the structure PO/EO-EO or PO-PO/EO-EO.

More in particular the present invention is related to a polyoxyethylene polyoxypropylene polyol having an average nominal hydroxy functionality of 2 - 6, an hydroxyl value of 14-80 mg KOH/g, an oxyethylene content of 50 - 90 % by weight and preferably of 60 - 90% by weight (calculated on the amount of oxyethylene and oxypropylene groups) and wherein 10-90 % and preferably 25-90 % and most preferably 50-90 % of the oxyethylene groups are distributed randomly and wherein the polyol is prepared by alkoxylation of an initiator having 2 - 6 active hydrogen atoms and at least one nitrogen atom and wherein the tails of the polyol have the structure PO/EO-EO or PO-PO/EO-EO. More preferably the polyol has a hydroxyl value ($OH_v$) of 20 - 70 mg KOH/g and most preferably of 20 - 50 mg KOH/g.

Further these polyols preferably obey the following formula:

$$Tm < T0$$

wherein Tm is the melting temperature in °C and

$$T0 = \frac{C \times Xn}{90 + Xn} + 5$$

in °C wherein C = 60° C and Xn is the number of oxyethylene units per OH group.

In the context of the present invention the following terms have the following meaning:

1) isocyanate index or NCO index or index :

the ratio of NCO-groups over isocyanate-reactive hydrogen atoms present in a formulation, given as a percent-

age:

$$\frac{[NCO] \times 100}{[active\ hydrogen]} \qquad (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual foaming process involving the isocyanate ingredients and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of the water) present at the actual preparation of the polyurethane material are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual foaming process one hydroxyl group is considered to comprise one reactive hydrogen, one primary amine group is considered to comprise one reactive hydrogen and one water molecule is considered to comprise two active hydrogens.

3) Reaction system : a combination of components wherein the polyisocyanates are kept in one or more containers separate from the isocyanate-reactive components.

4) The expression "polyurethane foam" as used herein refers to cellular products as obtained by reacting polyisocyanates with isocyanate-reactive hydrogen containing compounds, using foaming agents, and in particular includes cellular products obtained with water as reactive foaming agent (involving a reaction of water with isocyanate groups yielding urea linkages and carbon dioxide and producing polyurea-urethane foams) and with polyols, aminoalcohols and/or polyamines as isocyanate-reactive compounds.

5) The term "nominal hydroxyl functionality" is used herein to indicate the functionality (number of hydroxyl groups per molecule) of the polyol or polyol composition on the assumption that this is the functionality (number of active hydrogen atoms per molecule) of the initiator(s) used in the preparation of the polyol although in practice it will often be somewhat less because of some terminal unsaturation.

6) The word "average" refers to number average unless indicated otherwise.

The polyols are made in known manner by reacting an initiator, having 2 - 6 reactive hydrogen atoms and at least one nitrogen atom, propylene oxide and ethylene oxide in the right order provided 10-90 % and preferably 25-90 % and most preferably 50-90 % of the ethylene oxide is reacted together with all or some of the propylene oxide, preferably together with 10-90 % of the propylene oxide.

The following way of describing polyols is used in the present application: A PO-EO polyol is a polyol having first a PO (oxypropylene) block attached to the initiator followed by an EO block. A PO-PO/EO polyol is a polyol having first a PO block and then a block of randomly distributed PO and EO. A PO-PO/EO-EO polyol is a polyol having first a PO block then a block of randomly distributed PO and EO and then a block of EO. A PO-EO polyol is a polyol having first a PO block and then an EO block. In the above descriptions only one branch or chain or tail of a polyol is described (seen from the initiator); the nominal hydroxy functionality will determine how many of such tails will be present.

Polyols according to the present invention have the structure PO/EO-EO or PO-PO/EO-EO. Preferably the structure is PO-PO/EO-EO, wherein preferably 10-90% of the oxypropylene groups are distributed randomly. Polyols having the structure PO/EO-EO are prepared by first reacting an initiator with propylene oxide together with ethylene oxide, followed by reaction of the product obtained with ethylene oxide. Polyols having the structure PO-PO/EO-EO are prepared by first reacting an initiator with propylene oxide, followed by reaction of the product obtained with propylene oxide together with ethylene oxide, followed by reaction of the last product obtained with ethylene oxide.

In the context of the present patent application "polyol with random distribution" or "random polymerization" refers to a polyol or a process wherein (part of) the ethylene oxide and the propylene oxide have been / are reacted together leading to a structure PO/EO.

As already said, the polyols according to the present invention are made in known manner. The initiator is alkoxylated in appropriate steps, depending upon the desired polyol, generally at elevated temperature, preferably between 80 and 140° C; and generally in the presence of a catalyst, like a so-called double metal cyanide catalyst, a phosphazenium catalyst, an alkali or earth-alkaline catalyst. Catalysts comprising K, Na, Cs, Ba and/or Sr are preferred especially KOH and/or CsOH. As an example, a polyol with the structure PO - PO/EO - EO is made by first reacting an initiator with propyleneoxide (propoxylation), then with a mixture of propylene oxide and ethylene oxide followed finally by reaction with ethylene oxide (ethoxylation).

The initiators used in the present invention are molecules having at least one nitrogen atom and 2-6 hydrogen atoms capable of reacting with ethylene oxide and propylene oxide ('active hydrogen atoms'). The initiators may be selected form aromatic, aliphatic, arylaliphatic and cycloaliphatic amines. More in particular they may be selected from alkanolamines, amine-initiated polyether polyols, hydrazines, alkylene amines, alkylamines and aminoalkoxyalkanols. Most preferred are alkanolamines having 2 - 6 carbon atoms per alkanol group, alkylene amines having 2 - 4 carbon atoms per alkylene group, alkylamines having 1 - 6 carbon atoms and aminoalkoxyalkanols having 2 - 6 carbon atoms per alkoxy and per alkanol group. Examples of such initiators are 4.4'-diphenylmethanediamine and isomers and isomeric mixtures thereof, aniline, toluene diamine, 1-(2-aminoethyl)piperazine, ethanolamine, diethanolamine, triethanolamine, N-methylethanolamine, N-ethylethanolamine, N-butyl-ethanolamine, N-methyldiethanolamine, diisopropanolamine, triisopropanolamine, N-methylisopropanolamine, N-ethyliso propanolamine, N-propylisopropanolamine, ethylene diamine, 1,2 - and 1,3-propylene diamine, tetramethylene diamine, hexamethylene diamine, dodecamethylene diamine, trimethyldiaminohexane, N,N'-dimethylethylenediamine, higher homologues of ethylene diamine such as diethylene triamine, triethylenetetramine and tetraethylenepentamine, homologues of propylene diamine, as dipropylene triamine, tripropylene tetraamine and N,N-dimethyldipropylene triamine, 4-aminobenzylamine, 4-aminophenylethylamine, piperazine, N,N'-bisaminoethyldipropylene triamine, and 1-amino-3,3,5-trimethyl-5-aminomethylcyclohexane; n-butylamine; propylamine, ethylamine, methylamine, hydrazine and monosubstituted or N,N'-disubstituted hydrazines having as substituent groups $C_1$-$C_6$ alkyl, cyclohexyl or phenyl, and 2-(2-aminoethoxy)ethanol.

Preferred initiators are the alkanolamines, alkylene amines and alkylamines.

Mixtures of initiators may be used as well.

Further the present invention is concerned with a process for making a polyurethane foam, having an oxyethylene content of at least 25 % by weight and having a VOC level of 50-300 parts (measured according PB VWL 709 of Daimler-Chrysler) per million, wherein a polyol according to the invention is used and/or a prepolymer having an NCO value of 1-45 % by weight obtained by reacting a polyol composition comprising 1-100 % by weight of polyol according to the invention and an excessive amount of a polyisocyanate.

Such prepolymers are made in known manner from a polyisocyanate as defined hereinafter and a polyol composition comprising 1-100 % by weight of the polyol according to the present invention. The relative amounts of polyisocyanate and polyol can be easily determined by those skilled in the art depending on the chosen polyisocyanate, polyol and desired NCO-value.

If a polyol composition is used in preparing the prepolymer which composition comprises less then 100 % of the polyol according to the present invention then the remainder of the composition consists of other polyols, like polyester polyols, polyether polyols with another initiator and/or with an oxyethylene content other than 50-90 % by weight (on EO + PO). Preferably the amount of other polyols in the polyol composition is 0-50 % by weight.

Such prepolymers are made by reacting an excessive amount of polyisocyanate and a polyol composition, as described above, in such a relative amount that the NCO-value of the prepolymer is 1-45 % by weight.

Still further the present invention is concerned with a process for preparing a polyurethane material comprising reacting a polyisocyanate and a polyol composition comprising 1-100% by weight of the polyol according to the present invention, as described above.

The polyurethane material may be, amongst others, selected from a blown or non-blown elastomer, an integral skin foam, a rigid foam having open or closed cells, a semi-rigid foam or a flexible foam, a thermoplastic polyurethane, a coating, an adhesive, an encapsulant, a sealant and hydrophylic foams. Depending on which material is desired, other ingredients may be used in known manner.

The further other ingredients used in making the polyurethane materials are known as such and include polyisocyanates and, in case foamed polyurethane materials are made, blowing agents. Further the following ingredients may be used as optional ingredients: further isocyanate-reactive compounds like polyether polyols of a type different from those described above, e. g. polyoxyethylene polyols, comprising less than 10% by weight (on EO + PO) of oxypropylene groups, polyoxypropylene polyols optionally having less than 50 % by weight (on EO + PO) of oxyethylene groups, polyether polyols having 50-90 % by weight (on EO + PO) of oxyethylene groups and another initiator and/or another oxyethylene distribution than the polyols according to the present invention, polyester polyols, polyether polyamines, these compounds having a number average nominal functionality of 2-6, preferably of 2-3 and a number average equivalent weight of 500-5000, preferably of 1000-3000, and like chain extenders and cross-linkers which are isocyanate-reactive compounds having an equivalent weight below 500 and a functionality of 2 and 3-8 respectively.

Examples of such chain-extenders and cross-linkers are ethylene glycol, propane diol, 2-methyl-propane-1,3 diol, butanediol, pentane diol, hexane diol, diethylene glycol, propylene glycol, dipropylene glycol, polyoxyethylene diols and triols having an equivalent weight below 500, glycerol, trimethylolpropane, pentaerythritol, sucrose, sorbitol, mono-, di- and triethanolamine, ethylenediamine, toluenediamine, diethyltoluene diamine and polyether diamines and triamines having an equivalent weight below 500.

Still further the following optional ingredients may be used: catalysts enhancing the formation of urethane bonds like metal catalysts like tin octoate and dibutyltin dilaurate, tertiary amine catalysts like triethylenediamine and imidazoles like dimethylimidazole and other catalysts like maleate esters and acetate esters; surfactants; fire retardants; smoke suppressants; UV-stabilizers; colorants; microbial inhibitors; fillers and internal mould release agents (hereinafter called 'additives' collectively).

The polyols used in making the polyurethane materials and in particular the flexible foams may comprise dispersions or solutions of addition or condensation polymers.

Such modified polyols, often referred to as "polymer polyols", have been fully described in the prior art and include products obtained by the in situ polymerisation of one or more vinyl monomers, for example styrene and/or acrylonitrile, in the above polyether polyols, or by the in situ reaction between a polyisocyanate and an amino- and/or hydroxyfunctional compound, such as triethanolamine, in the above polyol.

The amount of dispersed polymer may range from 0.1 to 10% by weight on all ingredients. Particle sizes of the dispersed polymer of less than 50 microns are preferred.

During the last years several methods have been described to prepare polyether polyols having a low level of unsaturation. These developments have made it possible to use polyether polyols at the higher end of the molecular weight range since such polyols can now be prepared with an acceptably low level of unsaturation. According to the present invention polyols having a low level of unsaturation may be used as well. In particular such high molecular weight polyols having a low level of unsaturation may be used for preparing flexible foams having a high ball rebound and resilience.

If a foamed polyurethane is made a blowing agent is used. Blowing agents known in the art may be used like hydrocarbons, so called CFC's and HCFC's, $N_2$, $CO_2$ and water. Most preferably water is used as the blowing agent, optionally together with $CO_2$. The amount of blowing agent will depend on the desired density. Those skilled in the art will be able to determine the amount depending on the desired density and the blowing agent used. When water is used the amount will be up to 4 times the weight of all other ingredients used. For a flexible foam used in car seating and furniture the amount of water will be between 0.8-5% by weight; for a microcellular elastomer and an integral skin semi-rigid foam in general up to 0.8% by weight will be used and for hydrophilic foams more than 5% by weight preferably 20-300% by weight will be used; all amounts calculated on the amount of all other ingredients used.

Polyisocyanates used for preparing the polyurethane materials may be selected from aliphatic, cycloaliphatic and araliphatic polyisocyanates, especially diisocyanates, like hexamethylene diisocyanate, isophorone diisocyanate, cyclohexane-1,4-diisocyanate, 4,4-dicyclohexylmethane diisocyanate and m- and p- tetramethylxylylene diisocyanate, and in particular aromatic polyisocyanates like toluene diisocyanates (TDI), phenylene diisocyanates, naphthalene diisocyanates and most preferably diphenylmethane diisocyanates (MDI) and its homologues having an isocyanate functionality of more than two, like crude MDI and polymeric MDI.

Preferred polyisocyanates are diphenylmethane diisocyanates selected from pure 4,4'-MDI, isomeric mixtures of 4,4'-MDI, 2,4'-MDI and less than 10% by weight of 2,2'-MDI, and modified variants of these diisocyanates containing carbodiimide, uretonimine, and/or urethane groups, like uretonimine and/or carbodiimide modified MDI having an NCO content of at least 20% by weight and urethane modified MDI obtained by reacting excess MDI and a low molecular weight polyol (molecular weight of up to 1000) and having an NCO content of at least 20% by weight.

Mixtures of the isocyanates mentioned above may be used if desired.

The polyisocyanate may, if desired, contain dispersed urea particles and/or urethane particles prepared in a conventional way, e.g. by adding a minor amount an isophorone diamine to the polyisocyanate.

The most preferred polyisoycanate is a polyisocyanate containing at least 65%, preferably at least 80% and more preferably at least 95% by weight of 4,4'-diphehylmethane diisocyanate or a variant thereof. It may consist essentially of pure 4,4'-diphenylmethane diisocyanate or mixtures of that diisocyanate with one or more other organic polyisocyanates, especially other diphenylmethane diisocyanate isomers, for example the 2,4'-isomer optionally in conjunction with some of the 2,2'-isomer. The most preferred polyisocyanate may also be an MDI variant derived from a polyisocyanate composition containing at least 65% by weight of 4,4'-diphenylmethane diisocyanate. MDI variants are well known in the art and, for use in accordance with the invention, particularly include liquid (at 25°C) products obtained by introducing uretonimine and/or carbodiimide groups into said polyisocyanates, such a carbodiimide and/or uretonimine modified polyisocyanate preferably having an NCO value of at least 20% by weight, and/or by reacting such a polyisocyanate with one or more polyols having a hydroxyl functionality of 2-6 and a molecular weight of 62-1000 so as to obtain a modified polyisocyanate, preferably having an NCO value of at least 20% by weight. Up to 25% by weight of another polyisocyanate may be used together with this most preferred polyisocyanate; preferred other polyisocyanates are polymeric MDI and toluene diisoycanate.

The reaction to prepare the polyurethane materials, except the hydrophilic foams, may be conducted at a NCO-index of 40-150 and preferably of 70-110. For the hydrophilic foams the NCO index may vary much wider in view of the large amount of water used.

The polyurethane materials may be prepared according to the one-shot method and the prepolymer method. According to the one-shot method the polyisocyanate, the polyether polyol according to the present invention and the other, optional ingredients are combined and mixed and reaction is allowed to take place; if desired the polyether polyol and the other, optional ingredients are premixed.

According to the prepolymer method part or all of the isocyanate-reactive compounds, except water if used, are pre-reacted with an excessive amount of polyisocyanate to prepare a urethane-containing, isocyanate-terminated prepolymer; the prepolymer so formed is reacted with the remaining isocyanate-reactive compounds and/or the water.

The polyols according to the present invention are particularly suitable for preparing moulded integral skin foams, moulded semi-rigid foams and moulded flexible foams. Such moulded flexible foams preferably are made 1) from the polyisocyanates mentioned before, 2) from a polyol composition comprising at least 10% by weight of the polyols according to the present invention and preferably at least 50% by weight, the remainder preferably being other polyoxyethylene polyoxypropylene polyols having a number average equivalent weight of 500-5000 and an oxyethylene content of 25% by weight or more and preferably of 50% by weight or more, 3) from water and 4) optionally the chain-extenders and cross-linkers and additives mentioned before. These flexible foam mouldings may be made without using internal mould release agent and by using external mould release agents (EMR) only before the first moulding is made, as described in WO-00/55232. These flexible foam mouldings are particularly suitable for use in furniture, bedding and car-seating. Another surprising feature is that these flexible foams can be made according to the pour-in-place process and more in particular the foam-in-fabric process without using a barrier since the so called strike-through is avoided by using the ingredients according to the present invention. Further these foams have good properties like a high resilience, good compression set, low hysteresis loss and a nice feel.

The polyols according to the present invention may show some catalytic activity for the urethane formation. Therefore less (other) catalyst is needed and therefore the materials made may contain a lower amount of volatile organic chemicals.

Preferably the polyurethane foam fabricated using the process of the present invention has an oxyethylene content of at least 25 % by weight (based on the weight of the foam) and preferably at least 35 % by weight and having a VOC level of 50 - 300 parts per million (ppm). Preferably the foam is a flexible foam having a resilience of at least 60 % (as measured according ISO 8307) and an overall density of 25 -80 kg/m$^3$ (ISO 845); most preferably the flexible foam is a moulded foam. The VOC (volatile organic compounds) is measured according to PB VWL 709 of Daimler-Chrysler and preferably is 50 - 250 ppm.

The invention is illustrated by the following examples.

Example 1

1869 grams of triethanolamine and 138 grams of an aqueous solution of KOH (85% by weight) were put into an autoclave which was subsequently purged three times with nitrogen and then vacuum stripped at 125° C until the water content was lower than 0.03 % by weight. A sample of 21 g was removed for analysis. Then 8090 grams of propylene oxide (PO) and ethylene oxide (EO), in a weight ratio of 31.25:68.75, were added at 120° C over 185 minutes. The reaction was continued for another 10 minutes, followed by 30 minutes of vacuum stripping. 8160 g of the product obtained was discharged and 6850 grams of the above PO/EO mixture was added to the remainder at 120° C over a period of 190 minutes. The reaction was continued for another 30 minutes, followed by 60 minutes of vacuum stripping. The polyol obtained had an OH-value of 44 mg KOH/g.

Example 2

To the polyol finally obtained in example 1 2080 g of EO was added over a period of 50 minutes at 120° C. The reaction was allowed to proceed for another 60 minutes, followed by 60 minutes of vacuum stripping. The polyol was cooled to 80° C. 216 grams of Ambosol was added, followed by heating to 125° C and subsequent filtration over a plate filter. The polyol obtained had an OH-value of 39 mg KOH/g; an oxyethylene content of about 75% by weight (on total EO and PO), an amount of tipped or capped oxyethylene of about 20% by weight (on total EO and PO) and a primary hydroxyl content of 91%, calculated on all hydroxyl groups. The Tm in °C, as measured according to Differential Scanning Calorimetry (DSC), was 4. T0 (calculated from the formula) was 17 and the unsaturation level was 0.003 meq/g.

### Example 3

Similar to example 1 a polyol was made from diethylenetriamine instead of triethanolamine. The following differed from example 1:

- 5000 g of diethylenetriamine was used as initiator;
- 1513 g of an aqueous solution of 50% by weight of KOH was used;
- 18637 g of PO was added first at 115° C;
- 20000 g of polyol obtained was discharged and 48300 g of a mixture of PO/EO (26.7/73.3, w/w) added to the remainder. The polyol obtained had an OH-value of 45 mg KOH/g, the EO content was about 69 % weight (on EO + PO).

### Example 4

Example 2 was repeated with the provision that 12802 g of EO was added to the polyol finally obtained in example 3 and the vacuum stripping was conducted for 30 minutes. The polyol obtained had an OH-value of 36 mg KOH/g and an oxyethylene content of about 75% by weight. The polyol had the structure PO-PO/EO-EO wherein the PO and the EO-block constitute 5 and 20 % by weight of the total amount of PO and EO used to make the entire polyol, respectively; the remainder being formed by the PO/EO-copolymer block wherein the weight ratio of PO and EO is 20: 55. The Tm, T0 and unsaturation were 10° C, . 19° C and 0.011 meq/g respectively.

### Example 5

Examples 3 and 4 have been repeated with the proviso that the amount of PO, EO/PO mixture and EO have been adjusted to prepare a polyol with OH-value = 51 mg KOH/g while having the same relative EO and PO distribution as the polyol finally obtained in example 4. The Tm, T0 and unsaturation were 6° C, 15° C and 0.005 meq/g.

### Example 6

The polyols finally obtained in examples 2 and 5 were used in the following formulations, amounts are in parts by weight, in the preparation of free rise flexible polyurethane foams.

| Experiment | | 1* | 2 | 3* | 4 |
|---|---|---|---|---|---|
| Polyol 1 | | 100 | - | 100 | - |
| | 2 | - | 100 | - | - |
| | 3 | - | - | - | 100 |
| | 4 | 5 | 5 | - | - |
| D33LV | | 0.5 | 0.5 | 0.5 | 0.5 |
| Water | | 2.5 | 2.5 | 2.5 | 2.5 |
| Polyisocyanate 1 | | 47 | 47 | 47 | 47 |
| Cream time, (s) | | 15 | 8 | 10 | 10 |
| End of rise time, (s) | | 135 | 79 | 140 | 108 |
| Density, kg/m$^3$, ISO 845 | | 47 | 41 | - | - |
| Resilience, %, ISO 8307 | | 56 | 62 | - | - |

(continued)

| Experiment | 1* | 2 | 3* | 4 |
|---|---|---|---|---|
| Compression load deflection at 40%, kPa, ISO 3386-1 | 3.1 | 2.4 | - | - |

* = Comparative experiment
Polyol 1 is Caradol™ SA 3602, ex Shell, a polyol with a high oxyethylene content but not with an amine compound as initiator.
Polyol 2 is the polyol finally obtained in example 2.
Polyol 3 is the polyol finally obtained in example 5.
Polyol 4 is a polyoxyethylene polyol having a nominal functionality of 6 and a hydroxyl value of 187 mg KOH/g.
D33LV : amine catalyst ex Air Products
Polyisocyanate 1: a mixture of Suprasec 2020 and Suprasec MPR (30/70, w/w), both ex Huntsman Polyurethanes. Suprasec is a trademark of Huntsman International LLC.

Example 7

A conventional moulded flexible polyurethane foam was made using Daltocel 428 polyol ex Huntsman Polyurethanes (Daltocel is a trademark of Huntsman International LLC). A comparison was made with moulded foams using the polyol finally obtained in example 4. The ingredients and the results are given below. All ingredients, except the polyisocyanate, were mixed prior to addition to the mould. The temperature of the square, 9 liter mould was 60° C and the temperature of the ingredients was ambient temperature.

| Experiment | 1* | 2 | 3 |
|---|---|---|---|
| Polyol 5 | 95 | - | - |
| Polyol 6 | 5 | - | - |
| D33LV | 0.3 | 0.2 | 0.1 |
| D8154 | 0.7 | - | - |
| B4113 | 1 | - | - |
| Niax A1 | 0.1 | - | - |
| Polyol 4 | - | 5 | - |
| Polyol 7 | - | 100 | 100 |
| Polyol 8 | - | - | 5 |
| Water | 4 | 2.5 | 2.5 |
| Polyisocyanate 1 | - | 47 | 47 |
| Polyisocyanate 2 | 62 | - | - |
| Density, kg/m$^3$, ISO 845 | 54 | 52 | 46 |
| CLD 40%, kPa, ISO 3386-1 | 7.0 | 6.1 | 2.4 |
| Hysteresis loss, %, ISO 3386-1 | 26 | 9 | 15 |
| Compression set dry/wet 75% th, %, ISO 1856 A/C | 8/9 | 2/-2 | 3/-2 |
| Resilience, %, ISO 8307 | 56 | 71 | 67 |
| VOC, ppm | 4443 | 237 | 131 |

(continued)

| Experiment | 1* | 2 | 3 |
|---|---|---|---|
| Fogging, ppm | 202 | 3.1 | 0.5 |

Polyol 5 is a Daltocel 428 ex Huntsmam Polyurethanes.
Polyol 6 is a polyoxyethylene polyol having a nominal functionality of 3 and a hydroxyl value of 127 mg KOH/g.
D8154: catalyst ex Air Products (Dabco™8154)
B4113: Tegostab™-B4113 silicon surfactant ex Goldschmidt.
Niax™ A1: catalyst ex OSI
Polyol 7: the polyol finally obtained according to example 4.
Polyol 8: ethylene diamine initiated EO/PO polyol having an $OH_v$ of 194 mg KOH/g and an EO content of 84% by weight.
Polyisocyanate 2: Suprasec 2591 ex Huntsman Polyurethanes.
VOC and Fogging: measured according to PB VWL709 of Daimler-Chrysler.

Example 8

60 pbw of the polyol obtained in example 4 and 40 pbw of Suprasec MPR containing 100 ppm thionyl chloride were reacted for 3.5 hours at 85° C. An isocyanate-terminated prepolymer was obtained having an NCO value of 11.5 % by weight.

Example 9

Free rise flexible foams were made by mixing the following ingredients and by allowing them to react. The physical properties of the foams obtained are given in below table as well.

| Experiment | 1 | 2 |
|---|---|---|
| Prepolymer from example 8 | 42.6 | 70 |
| Polyisocyanate 1 | 12.8 | - |
| Polyol from example 4 | 42.6 | 28.4 |
| D33LV | 0.1 | - |
| Water | 1.6 | 1.6 |
| Density, kg/m$^3$, ISO 845 | 54 | 62 |
| CLD 40%, kPa, ISO 3386-1 | 4.1 | 3.6 |
| Hysteresis, %, ISO 3386-1 | 17 | 19 |
| Resilience, %, ISO 8307 | 70 | 72 |

In all examples the polyisocyanate and polyol contained a small amount of antioxydant, which together accounts for about 65 ppm of VOC level in the foam.

**Claims**

1. Polyoxyethylene polyoxypropylene polyol having an average nominal hydroxyl functionality of 2-6, an average equivalent weight of 500-5000, an average molecular weight of 1000-20000, an oxyethylene content of 50-90 % by weight (calculated on the amount of oxyethylene and oxypropylene groups) and wherein 10-90 % of the oxyethylene groups are distributed randomly and wherein the polyol is prepared by alkoxylation of an initiator having 2-6 active hydrogen atoms and at least one nitrogen atom and wherein the tails of the polyol have the structure PO/EO-EO or PO-PO/EO-EO.

2. Polyol according to claim 1 wherein the equivalent weight is 1000-3000, the molecular weight is 2000-10000, 50-90 % of the oxyethylene groups are distributed randomly and the oxyethylene content is 60-90 % by weight.

**3.** Polyol according to claims 1-2 wherein 10-90 % of the oxypropylene groups are distributed randomly.

**4.** Polyol according to claims 1-3 wherein the initiator is selected from alkanolamines having 1-6 carbon atoms per alkanol group, alkylene amines having 1-4 carbon atoms per alkylene group and alkylamines having 1-6 carbon atoms.

**5.** Process for making a polyurethane foam, having an oxyethylene content of at least 25 % by weight and having a VOC level of 50-300 parts (measured according PB VWL 709 of Daimler-Chrysler) per million, wherein a polyol according to claims 1-4 is used and/or a prepolymer having an NCO value of 1-45 % by weight obtained by reacting a polyol composition comprising 1-100 % by weight of a polyol according to claims 1-4 and an excessive amount of a polyisocyanate.

**6.** Process according to claim 5 wherein the foam is a flexible foam having a resilience of at least 60 % and an overall density of 25-80 kg/m$^3$ and the VOC level is 50-250 ppm.

**7.** Process according to claims 5-6 wherein the foam is a moulded foam.

**Patentansprüche**

**1.** Polyoxyethylenpolyoxypropylenpolyol mit einer durchschnittlichen nominellen Hydroxylfunktionalität von 2 bis 6, einem durchschnittlichen Äquivalentgewicht von 500 bis 5000, einem durchschnittlichen Molekulargewicht von 1000 bis 20000, einem Oxyethylengehalt von 50 bis 90 Gew.-% (in Bezug auf die Menge der Oxyethylenund Oxypropylengruppen berechnet), und wobei 10 bis 90 % der Oxyethylengruppen regellos verteilt sind, und wobei das Polyol durch Alkoxylieren eines Initiators mit 2 bis 6 aktiven Wasserstoffatomen und mindestens einem Stickstoffatom hergestellt ist, und wobei die Enden den Polyols die Struktur PO/EO-EO oder PO-PO/EO-EO haben.

**2.** Polyol nach Anspruch 1,
wobei das Äquivalentgewicht 1000 bis 3000 beträgt, das Molekulargewicht 2000 bis 10000 beträgt, 50 bis 90 % der Oxyethylengruppen regellos verteilt sind, und der Oxyethylengehalt 60 bis 90 Gew.-% beträgt.

**3.** Polyol nach den Ansprüchen 1 und 2,
wobei 10 bis 90 % der Oxypropylengruppen regellos verteilt sind.

**4.** Polyol nach den Ansprüchen 1 bis 3,
wobei der Initiator aus Alkanolaminen mit 1 bis 6 Kohlenstoffatomen pro Alkanolgruppe, Alkylenaminen mit 1 bis 4 Kohlenstoffatomen pro Alkylengruppe und Alkylaminen mit 1 bis 6 Kohlenstoffatomen ausgewählt ist.

**5.** Verfahren zum Herstellen eines Polyurethanschaumstoffs mit einem Oxyethylengehalt von mindestens 25 Gew.-% und einem VOC-Wert von 50 bis 300 ppm (gemäß PB VWL 709 von Daimler-Chrysler gemessen), wobei ein Polyol gemäß den Ansprüchen 1 bis 4 und/oder ein Vorpolymerisat mit einem NCO-Wert von 1 bis 45 Gew.-% verwendet werden, das durch Umsetzen einer Polyolzusammensetzung, die 1 bis 100 Gew.-% eines Polyols nach den Ansprüchen 1 bis 4 enthält, und einer Überschussmenge eines Polyisocyanats erhalten wird.

**6.** Verfahren nach Anspruch 5,
wobei der Schaumstoff ein Weichschaumstoff mit einer Elastizität von mindestens 60 % und einer Gesamtdichte von 25 bis 80 kg/m$^3$ ist und der VOC-Wert 50 bis 250 ppm beträgt.

**7.** Verfahren nach den Ansprüchen 5 und 6,
wobei der Schaumstoff ein Formschaumstoff ist.

**Revendications**

**1.** Polyoxyéthylène-polyoxypropylène-polyol ayant une fonctionnalité hydroxyle nominale moyenne de 2 à 6, un poids équivalent moyen de 500 à 5000, un poids moléculaire moyen de 1000 à 20 000, une teneur en oxyéthylène de 50 à 90 % en poids (calculée sur la base de la quantité de groupes oxyéthylène et oxypropylène) et dans lequel 10 à 90 % des groupes oxyéthylène sont distribués de manière aléatoire et dans lequel le polyol est préparé par alkoxylation d'un initiateur ayant 2 à 6 atomes d'hydrogène actifs et au moins un atome d'azote et dans lequel les queues du polyol ont la structure PO/EO-EO ou PO-PO/EO-EO.

2. Polyol suivant la revendication 1, dans lequel le poids équivalent va de 1000 à 3000, le poids moléculaire va de 2000 à 10 000, 50 à 90 % des groupes oxyéthylène sont distribués de manière aléatoire et la teneur en oxyéthylène va de 60 à 90 % en poids.

3. Polyol suivant les revendications 1 et 2, dans lequel 10 à 90 % des groupes oxypropylène sont distribués de manière aléatoire.

4. Polyol suivant les revendications 1 à 3, dans lequel l'initiateur est choisi entre des alcanolamines ayant 1 à 6 atomes de carbone par groupe alcanol, des alkylène-amines ayant 1 à 4 atomes de carbone par groupe alkylène et des alkylamines ayant 1 à 6 atomes de carbone.

5. Procédé pour produire une mousse de polyuréthanne, ayant une teneur en oxyéthylène d'au moins 25 % en poids et ayant une teneur en VOC de 50 à 300 parties (mesurée suivant PB VWL 709 de Daimler-Chrysler) par million, dans lequel est utilisé un polyol suivant les revendications 1 à 4 et/ou un prépolymère ayant un indice de NCO de 1 à 45 % en poids obtenu en faisant réagir une composition de polyol comprenant 1 à 100 % en poids d'un polyol suivant les revendication 1 à 4 et une quantité excessive d'un polyisocyanate.

6. Procédé suivant la revendication 5, dans lequel la mousse est une mousse flexible ayant une résilience d'au moins 60 % et une masse volumique totale de 20 à 80 kg/m$^3$ et la teneur en VOC va de 50 à 250 ppm.

7. Procédé suivant les revendications 5 et 6, dans lequel la mousse est une mousse moulée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5367050 A
- US 5476969 A
- US 5672636 A
- EP 539819 A
- WO 0158976 A
- US 2979528 A
- GB 776661 A
- EP 187949 A
- EP 582127 A
- US 3042631 A
- US 4186119 A
- US 3779927 A
- EP 341593 A
- WO 0055232 A

**Non-patent literature cited in the description**

- *SPI-PU Conference Proceedings,* 26 September 1995, 212-215
- **I.R. SCHMOLKA.** Review of Block Polymer Surfactants. *Journal of the American Oil Chemists Society,* March 1977, 112